(19) Europäisches Patentamt / European Patent Office / Office européen des brevets

(11) **EP 3 354 948 B1**

(12) **EUROPÄISCHE PATENTSCHRIFT**

(45) Veröffentlichungstag und Bekanntmachung des Hinweises auf die Patenterteilung:
**27.05.2020 Patentblatt 2020/22**

(51) Int Cl.:
***F16K 17/16*** *(2006.01)*

(21) Anmeldenummer: **17153103.1**

(22) Anmeldetag: **25.01.2017**

(54) **BERSTSCHEIBENANORDNUNG MIT EINER BERSTSCHEIBE UND EINEM AKTUATOR ZUM HERABSETZEN DES BERSTDRUCKS**

RUPTURE DISC ASSEMBLY WITH A RUPTURE DISC AND AN ACTUATOR FOR REDUCING THE RUPTURE PRESSURE

SYSTÈME DE DISQUE DE RUPTURE COMPRENANT UN DISQUE DE RUPTURE ET UN ACTIONNEUR DESTINÉ À RÉDUIRE LA PRESSION D'ÉCLATEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(43) Veröffentlichungstag der Anmeldung:
**01.08.2018 Patentblatt 2018/31**

(73) Patentinhaber: **Rembe GmbH Safety + Control**
**59929 Brilon (DE)**

(72) Erfinder:
• **Penno, Bernhard**
**59929 Brilon (DE)**
• **Penno, Stefan**
**59929 Brilon (DE)**

(74) Vertreter: **Graefe, Jörg et al**
**Fritz Patent- und Rechtsanwälte**
**Partnerschaft mbB**
**Postfach 1580**
**59705 Arnsberg (DE)**

(56) Entgegenhaltungen:
**US-A- 4 126 184          US-A- 6 006 842**
**US-A1- 2010 127 195**

• **Chemring Energetics Uk: "METRON ACTUATOR", , 14 July 2016 (2016-07-14), pages 1-35, XP055561501, Ayrshire (UK) Retrieved from the Internet: URL:http://www.chemringenergetics.co.uk/~/ media/Files/C/Chemring-Energetics-V2/Metro n%20A5%20Brochure.pdf [retrieved on 2019-02-25]**

**Beschreibung**

Die vorliegende Erfindung betrifft eine Berstscheibenanordnung

- mit einem ein- oder mehrteiligen Körper, der eine Öffnung aufweist, die einen Auslass für eine Leitung oder einen Behälter bildet,
- mit einer Berstscheibe, welche die Öffnung verschließt und welche bei einer Beaufschlagung mit einem Berstdruck birst, um die Öffnung freizugeben, und
- mit einem Aktuator zum Herabsetzen des Berstdrucks, wobei der Aktuator eine Stange, insbesondere einen Stößel hat, der zum Herabsetzen des Berstdrucks auf die Berstscheibe einwirkt, insbesondere gegen die Berstscheibe schlagbar ist.

In der europäischen Patentanmeldung 15 174 944.7 ist eine Berstscheibenanordnung mit diesen Merkmalen beschrieben.

Berstscheibenanordnungen begegnet man häufig in Industrieanlagen, um Leitungen oder Behälter aller Art gegen unzulässige Drücke sowie Explosionen zu schützen. Berstscheiben schaffen in den Leitungen oder Behältern oder anderen Gebilden Sollbruchstellen, an denen die Leitungen oder Behälter oder die anderen Gebilde öffnen, falls der Druck in den Leitungen oder Behältern oder den anderen Gebilden so ansteigt, dass ein unkontrolliertes Bersten der Leitungen oder Behälter oder der anderen Gebilde zu erwarten ist. Durch die bei einem Nennberstdruck öffnenden Berstscheiben wird dann ein kontrolliertes Entlüften oder eine kontrollierte Druckentlastung der Leitungen oder Behälter oder der anderen Gebilde möglich.

Berstscheibenanordnungen weisen in der Regel einen Körper auf, der auf mannigfaltige Art gestaltet sein kann. Er kann monolithisch oder aus mehreren Teilen hergestellt sein. Der Körper kann Teil der abzusichernden Leitung oder des abzusichernden Behälters sein. Der Körper hat eine Öffnung, welche einen Auslass der abzusichernden Leitung oder des abzusichernden Behälters bildet, über die im Falle des Erreichens des nominalen Berstdrucks eine Druckentlastung stattfindet und das in der Leitung oder dem Behälter gelagerte Medium entweichen kann. Diese Öffnung ist im Normalbetrieb durch eine Berstscheibe verschlossen, die dazu an dem Körper befestigt ist. Der nominale Berstdruck (auch Ansprechdruck) einer Berstscheibe hängt von vielen Merkmalen der Berstscheibe ab. Zu nennen ist dabei vor allen Dingen die äußere Struktur, zum Beispiel die geometrischen Merkmale der Berstscheibe (die Dicke, die Länge und Breite oder der Durchmesser der Berstscheibe, Wölbungen, Einschnitte in der Berstscheibe durch Materialabtrag usw.) oder das verwendete Material. Wichtige Faktoren sind neben dem gewählten Material auch die innere Struktur des Materials, zum Beispiel die Mikrostruktur des Materials, die zum Beispiel durch lokale Verformungen verändert sein kann, wie zum Beispiel in dem Dokument DE 10 2007 022 018 A1 beschrieben ist. Der nominale Berstdruck kann auch durch Knickstäbe eingestellt werden.

Berstscheiben haben sich in der Vergangenheit millionenfach bewährt und Anlagen, Tiere und Menschen vor großen Schäden und Katastrophen bewahrt. Dennoch können auch in den Fällen, in denen es zum Öffnen einer Berstscheibe kommt, Schäden entstehen.

In einigen dieser Fälle kann es wünschenswert sein, wenn ein Öffnen der Berstscheibe bei einem Druck erfolgen könnte, der niedriger ist als der nominale Berstdruck, zum Beispiel um die Hälfte niedriger ist als der nominale Berstdruck. Ein Öffnen der Berstscheibe bei niedrigerem Druck ist bei einer Berstscheibenanordnung, wie sie aus der europäischen Patentanmeldung 15 174 944.7 bekannt ist, möglich. Zwar können auch während eines störungsfreien Betriebs der Leitung oder des Behälters Drücke erreicht werden, die - um bei dem Beispiel zu bleiben - höher sind als die Hälfte des nominalen Berstdrucks, dieses führt aber bei den Berstscheibenanordnungen gemäß der Anmeldung 15 174 944.7 nicht zu einem Öffnen der Berstscheibe, da im störungsfreien Betrieb der Berstdruck der Berstscheibe nicht herabgesetzt ist. Wird dagegen der Berstdruck mittels des Aktuators herabgesetzt, kann die Berstscheibe auch bei einem Druck bersten, der der Hälfte des nominalen Berstdrucks entspricht.

Mittels des Aktuators kann dann der Berstdruck der Berstscheibe selektiv so herabgesetzt werden, dass die Berstscheibe auch bei einem Druck öffnet, der geringer ist als der Nennberstdruck. Damit kann die durch die Berstscheibenanordnung abgesicherte Leitung oder der durch die Berstscheibenanordnung abgesicherte Behälter oder das abgesicherte Gebilde auch bei einem Druck entlastet werden, der geringer ist als der nominale Berstdruck. Gleichzeitig kann die Berstscheibe aber zumindest bis zum Herabsetzen des Berstdrucks bei Drücken betrieben werden, die höher sind als der Druck, auf den der Berstdruck durch den Einfluss des Aktuators herabgesetzt werden kann. Handelsübliche Aktuatoren zeigt beispielsweise die Broschüre Chemring Energetics UK: "Metron Actuator" der Chemring Energetics UK (www.chemringenergetics.co.uk).

In dem Dokument US 4 126 184 A wird eine Vorrichtung zum Freisetzen einer Substanz aus einem Druckbehälter unter Verwendung vom zwei Berstscheiben und einem Zünder, der elektrisch betätigt werden kann, offenbart. Das Dokument US 6,006,842 zeigt eine Vorrichtung zum Freisetzen eines Stoffes aus einem Druckbehälter, bei dem eine zweite und dritte Berstscheibe durch den Einsatz eines Inertgases als überdruckerzeugendes Mittel bersten.

In der Anmeldung 15 174 944.7 ist dargestellt, dass der Aktuator auf der Seite der Berstscheibe angeordnet sein kann, die dem abzusichernden Behälter oder der abzusichernden Leitung zugewandt ist. Der Aktuator ist damit in einer Umgebung angeordnet, in der sich ein Medium befindet, das in dem abzusichernden Behälter gelagert oder durch die abzusichernde Leitung geführt wird. Das Medium, es kann sich zum Beispiel um ein Gas, eine Flüssigkeit oder anderes handeln, könnte den Aktuator beeinflussen, zum Beispiel seine Funktion beeinträchtigen, ihn verschmutzen oder sogar unbrauchbar machen.

In dem Dokument US 2010/0127195 A1 ist offenbart, den Aktuator in einem Gehäuse anzuordnen, das eine Gehäuseöffnung hat, wobei nur die Stange durch die Gehäuseöffnung herausragt und dem Medium ausgesetzt ist, das die Stange verschmutzen oder sogar unbrauchbar machen kann.

Hier setzt die vorliegende Erfindung an.

Der Erfindung liegt das Problem zugrunde, eine Berstscheibenanordnung der eingangs genannten Art so zu verbessern, dass Kontakt des Medium mit der Stange, insbesondere dem Stößel des Aktuators vermieden wird, der Aktuator einschließlich der Stange, insbesondere des Stößels aber dennoch auf der Seite der Berstscheibe anordnet ist, die dem abzusichernden Behälter oder der abzusichernden Leitung zugewandt ist.

Dieses Problem wird dadurch gelöst, dass die Gehäuseöffnung mit einem Deckel verschlossen ist, wobei der Deckel und der Aktuator so aufeinander abgestimmt sind, dass bei einer Betätigung des Aktuators die auf die Stange, insbesondere den Stößel, des Aktuators wirkende Kraft ausreicht, um mit der Stange, insbesondere dem Stößel, den die Gehäuseöffnung verschließenden Deckel zu durchstoßen und gegen die Berstscheibe zu schlagen.

Durch die Einhausung des Aktuators einschließlich der Stange, insbesondere des Stößels, in dem Gehäuse ist dieser vor dem Medium in dem abzusichernden Behälter oder der abzusichernden Leitung geschützt. Das Medium kann die Funktion des Aktuators nicht beeinflussen. Mit dem Deckel kann auf einfache Weise ein vollständiger Schutz des Aktuators vor dem Medium geschaffen werden. Dadurch dass der Deckel bei einer Betätigung des Aktuators zerstört wird und damit der Weg für den Stößel des Aktuators frei wird, ist es auf einfache Art möglich, dass der Aktuator dann wirksam werden kann, wenn es notwendig ist, ohne dass ein Mechanismus vorgesehen sein muss, durch den der Deckel geöffnet und die Gehäuseöffnung freigegeben wird. Bei dem Deckel kann es sich um eine weitere Berstscheibe handeln.

Der Deckel kann eine Ronde sein. Eine Ronde lässt sich schnell und einfach aus verschiedenen Materialien herstellen. Sie kann aus einer Platte gestanzt oder in einfachen Formen gegossen werden.

Der Deckel kann aus Kunststoff oder aus Metall bestehen, insbesondere aus Metallblech, insbesondere Stahlblech.

Der Deckel kann mittels einer Überwurfmutter oder einer gelochten Kappe an dem Gehäuse befestigt sein, wobei eine Öffnung der Überwurfmutter bzw. ein Loch in der Kappe so groß ist, dass der Stößel des Aktuators hindurchtreten kann. Der Deckel könnte auch mit einem Sprengring oder mit Schrauben an dem Gehäuse angebracht sein. Ebenso ist es möglich, dass der Deckel an dem Gehäuse angeschweißt ist.

Vorteilhaft ist der Deckel gegenüber dem Gehäuse und/oder gegenüber der Überwurfmutter oder der gelochten Kappe mittels wenigstens einer Dichtung oder einer dichtenden Flüssigkeit oder eines dichtenden Feststoff-Flüssigkeitsgemischs abgedichtet. Zwar kann auch ohne Dichtung oder ohne dichtende Flüssigkeit oder ohne dichtendes Feststoff-Flüssigkeitsgemisch eine ausreichende Abdichtung des Deckels gegenüber dem Gehäuse erreicht werden, eine Dichtung oder eine dichtende Flüssigkeit oder ein dichtendes Feststoff-Flüssigkeitsgemisch bietet aber auf einfache Art eine höhere Gewähr für eine hinreichende Dichtigkeit. Bei der Dichtung kann es sich um einen Dichtungsring, insbesondere einen O-Ring handeln.

Gemäß der Erfindung ist es auch möglich, dass die Gehäuseöffnung so bemessen ist, dass zwischen der Gehäuseöffnung und der Stange, insbesondere dem Stößel eine Spielpassung besteht. Es kann sich um eine $d_{h9}^{H8}$-, $d_{g6}^{H7}$- oder eine $d_{h6}^{H7}$- -Passung handeln. Der Spalt zwischen dem Gehäuse und der Stange kann mit einer Dichtung, einer dichtenden Flüssigkeit oder eines dichtenden Feststoff-Flüssigkeitsgemischs abgedichtet sein. Bei einer derartigen Gestaltung der Erfindung ist nur das Ende der Stange dem Medium in dem abzusichernden Behälter oder der abzusichernden Leitung ausgesetzt. Es ist dann ausreichend, wenn die Stange so gestaltet ist, dass sie dem Medium ohne Beeinträchtigung ausgesetzt sein kann, was grundsätzlich auch für den Deckel gilt. Bei dieser Ausführung der Erfindung ist es möglich, dass ein Ende der Stange mit der Berstscheibe verbunden ist.

Der Körper einer erfindungsgemäßen Berstscheibenanordnung kann eine Ausnehmung, insbesondere eine Gewindebohrung, aufweisen. Ferner ist es möglich, dass das Gehäuse in die Ausnehmung eingesetzt ist, insbesondere mittels eines Außengewindes in die Gewindebohrung eingeschraubt ist.

Das Gehäuse für den Aktuator einer erfindungsgemäßen Berstscheibenanordnung kann in einen Innenraum des Körpers hineinragen. Insbesondere kann ein mit dem Deckel versehenes Ende des Gehäuses in den Innenraum des Körpers hineinragen. Ein anderes Ende des Gehäuses kann dagegen aus dem Körper herausragen. An diesem Ende kann das Gehäuse eine Öffnung aufweisen, durch die Kabel von oder zum Aktuator geführt sind.

Das Gehäuse für den Aktuator einer erfindungsgemäßen Berstscheibenanordnung kann einen Abschnitt mit einem Innengewinde aufweisen. Der Aktuator kann einen Abschnitt mit einem Außengewinde aufweisen. Der Aktuator kann mit dem Außengewinde in das Innengewinde des Gehäuses eingeschraubt sein, wodurch der Aktuator in dem Gehäuse fixiert sein kann.

Andere Arten der Fixierung des Aktuators in dem Gehäuse sind auch möglich.

Der Körper einer erfindungsgemäßen Berstscheibenanordnung kann einen Flansch haben, an dem die Berstscheibe befestigt ist. Die Berstscheibe kann auch auf jede andere Art, insbesondere jede andere bekannte Art an dem Körper befestigt sein. Der Körper kann insbesondere einen hohlzylindrischen Abschnitt aufweisen, in dem die Ausnehmung vorgesehen ist, in die das Gehäuse eingesetzt ist. Die Ausnehmung kann insbesondere in einer Wand des hohlzylindrischen Abschnitts vorgesehen sein. Die Ausnehmung kann eine Gewindebohrung sein, an die sich ein Stutzen anschließt.

Der Körper kann wenigstens eine weitere Ausnehmung aufweisen, in die wenigstens ein Messgrößen-Aufnehmer eingesetzt ist, der in den Körper hineinragt und physikalische und/oder chemische Größen in dem Körper messtechnisch erfasst. Die mittels des oder der Messgrößen-Aufnehmer erfassten Messgrößen können in einer Steuerung der Berstscheibenanordnung verarbeitet werden. Die Steuerung kann einen Eingang zur Verbindung mit dem Messgrößen-Aufnehmer haben. In Abhängigkeit von den Werten der erfassten Messgröße oder der erfassten Messgrößen kann mittels der Steuerung der Aktuator gesteuert werden. Die Steuerung kann dazu einen Ausgang aufweisen, der mit einem Schalteingang des Antriebs verbunden ist. Zumindest eine der erfassten Messgrößen kann der Druck und/oder die Temperatur sein. Es ist aber auch möglich, dass die Konzentration eines bestimmten Stoffes bestimmt wird. Die Steuerung kann in der Lage sein, aus den Messgrößen deren zeitliche Ableitung, also deren Veränderung zu ermitteln.

Der hohlzylindrische Abschnitt des Körpers kann auf einer ersten Seite mit dem Flansch des Körpers verbunden sein und durch die an dem Flansch anliegende Berstscheibe verschlossen sein. Eine zweite Seite des hohlzylindrischen Abschnitts des Körpers kann Verbindungsstrukturen zur Verbindung mit einem Behälter oder einer Leitung aufweisen.

Die Herabsetzung des Berstdrucks der Berstscheibe ist vorzugsweise irreversibel. Irreversibel bedeutet in diesem Zusammenhang, dass der Berstdruck einmalig herabgesetzt wird und dann nicht wieder erhöht werden kann. Soll der Berstdruck der Berstscheibenanordnung wieder erhöht werden, muss dann die Berstscheibenanordnung oder zumindest die Berstscheibe ausgetauscht werden.

Gemäß der Erfindung kann die Berstscheibenanordnung so gestaltet sein, dass der Berstscheibe mittels des Aktuators stoßartig Energie zuführt werden kann. Insbesondere durch das stoßartige Zuführen von Energie ist es möglich, das Verhalten der Berstscheibe schnell zu beeinflussen und den Nennberstdruck zu beeinflussen. Bei der zugeführten Energie kann es sich um kinetische Energie handeln. Handelt es sich um kinetische Energie, kann diese zum Beispiel durch Zugkräfte oder Druckkräfte auf die Berstscheibe übertragen werden.

Durch den Aktuator wird der Berstdruck ohne Zerstörung der Berstscheibe herabgesetzt. Dadurch bleibt die Berstscheibe grundsätzlich unzerstört, es sei denn, dass der Druck in der Leitung oder in dem Behälter höher als der herabgesetzte Berstdruck ist. Eine Zerstörung der Berstscheibe, zum Beispiel durch eine mechanische Lochung der Berstscheibe durch den Aktuator, hätte eine Herabsetzung des Berstdrucks auf null zur Folge, die im Lichte der der Erfindung zu Grunde liegenden Aufgabe nicht sinnvoll ist und im Sinne der Anmeldung auch nicht als Herabsetzung des Berstdrucks verstanden wird.

In Folge der Herabsetzung des Berstdrucks durch den Aktuator kann es dennoch zu einer sofortigen Zerstörung der Berstscheibe kommen, nämlich dann, wenn in der Leitung, dem Behälter oder Gebilde ein Druck herrscht, der über dem Berstdruck liegt, auf den der Aktuator den Berstdruck herabsetzt. Die Berstscheibe spricht dann aufgrund der Herabsetzung des Berstdrucks durch den Aktuator sofort an.

Durch den Aktuator einer erfindungsgemäßen Berstscheibenanordnung kann zum Herabsetzen des Berstdrucks zumindest an einer Stelle der Berstscheibe die innere Struktur des Materials, aus dem die Berstscheibe hergestellt ist, und/oder die Geometrie der Berstscheibe, insbesondere die Form der Berstscheibe, verändert werden. Die Stelle der Berstscheibe, auf die eingewirkt wird, kann z. B. bei einer Berstscheibe mit einem Durchmesser von 142 mm, einer Blechstärke von 0,8 und einer Wölbung mit einer Tiefe von 23,5 mm einen Durchmesser von 2,7 mm haben.

Der Aktuator einer erfindungsgemäßen Berstscheibenanordnung kann neben der Stange einen Antrieb aufweisen, wobei die Stange von dem Antrieb angetrieben werden kann, um bei einem Einschalten des Antriebs durch einen Schlag der Stange oder durch einen Zug der Stange Energie auf die Berstscheibe zu übertragen.

Die Stange kann eine erste Fläche haben, welche im ausgeschalteten Zustand des Antriebs mit einem Abstand zur Berstscheibe angeordnet ist und im eingeschalteten Zustand, insbesondere während der Ausführung des Schlags, an der Berstscheibe anliegt. Ebenso ist es möglich, dass die erste Fläche im ausgeschalteten Zustand des Antriebs an der Berstscheibe anliegt, während im eingeschalteten Zustand die erste Fläche der Stange von der Berstscheibe entfernt wird, wodurch sich die innere oder die äußere Struktur der Berstscheibe ändert.

Bei dem Antrieb kann es sich um einen elektrischen Antrieb handeln. Pneumatische oder hydraulische Antriebe können auch verwendet werden. Der Antrieb kann einen Elektromagneten umfassen.

Die von einem Antrieb aufgebrachte Kraft kann bei dem schon zuvor genannten Beispiel einer Berstscheibe von 142 mm Durchmesser bis 2300 N betragen. Es kann eine Energie von 3,43 J eingebracht werden.

In einer erfindungsgemäßen Berstscheibenanordnung kann der Aktuator so angeordnet sein, dass eine Stelle der Berstscheibe, auf welche die Stange beim Einschalten des Antriebs schlägt oder an welcher die Stange beim Einschalten des Antriebs zieht, zwischen einem Mittelpunkt der Berstscheibe und einem Rand der Berstscheibe liegt. Die Stelle kann auch dem Mittelpunkt entsprechen. Versuche haben gezeigt, dass bei einer runden Umkehrberstscheibe der Berstdruck umso mehr herabgesetzt werden kann, je mehr die Stelle, auf welche die Stange einwirkt, in der Nähe des Mittelpunkts liegt. Durch die Wahl der Stelle entlang eines Radius ließe sich im Versuch die Herabsetzung des Berstdrucks bestimmen.

Die in einer erfindungsgemäßen Berstscheibenanordnung verwendete Berstscheibe kann eine Umkehrberstscheibe sein. Grundsätzlich können in einer erfindungsgemäßen Berstscheibenanordnung beliebige Berstscheiben in jeder Form verwendet werden, zum Beispiel zugbelastete Berstscheiben, Umkehrberstscheiben, Knickstab-Umkehrberstscheiben, flache Berstscheiben, usw.

Weitere Merkmale und Vorteile der vorliegenden Erfindung werden deutlich anhand der nachfolgenden Beschreibung eines Ausführungsbeispiels unter Bezugnahme auf die beiliegenden Abbildungen. Darin zeigen:

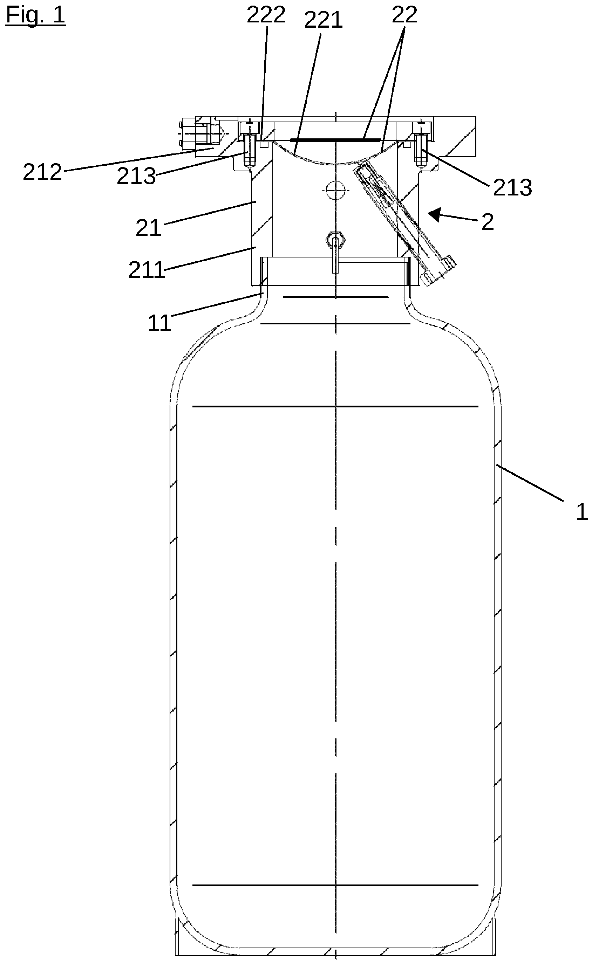

Fig. 1    einen Schnitt durch einen mit der erfindungsgemäßen Berstscheibenanordnung gesicherten Behälter,

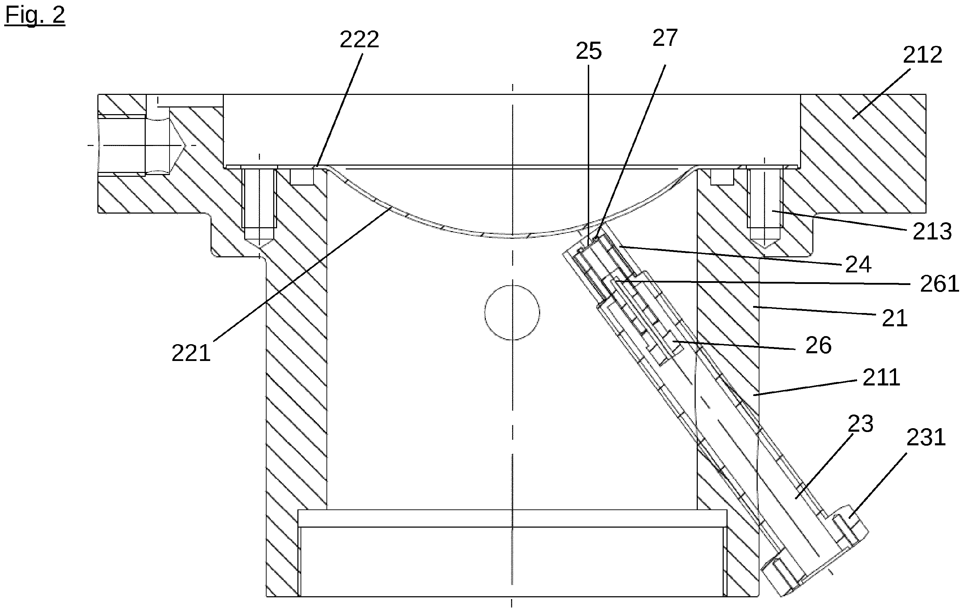

Fig. 2    einen Schnitt durch die Berstscheibenanordnung,

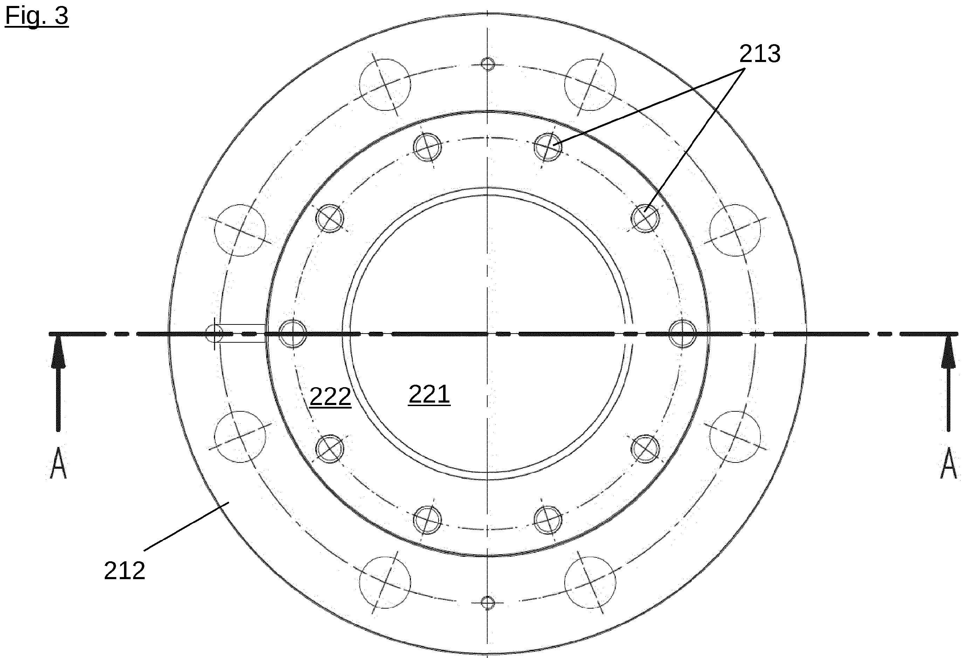

Fig. 3    eine Draufsicht auf die Berstscheibenanordnung und

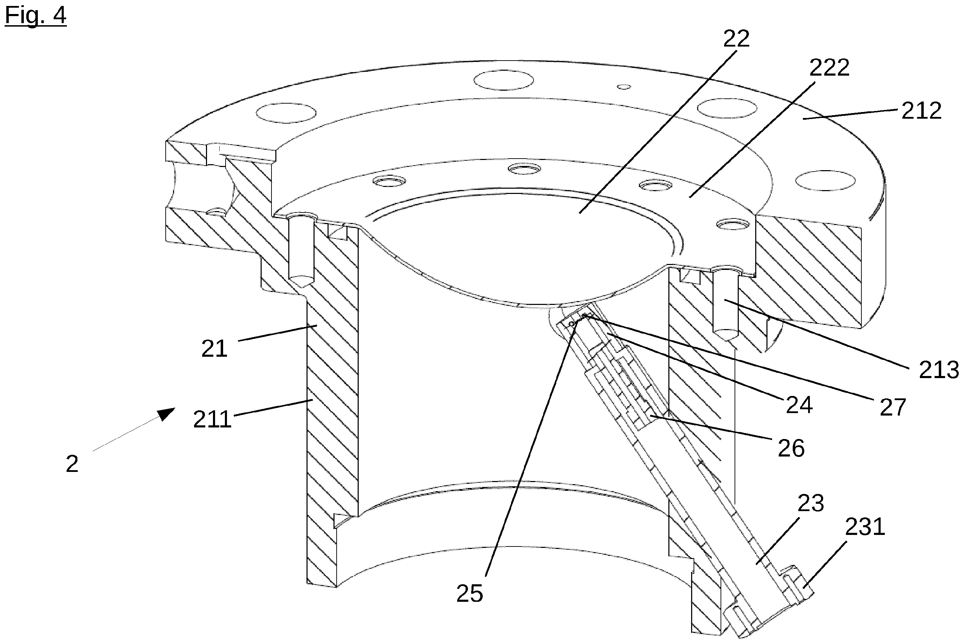

Fig. 4    eine perspektivische Ansicht auf die geschnittene Berstscheibenanordnung.

Bei dem durch die erfindungsgemäße Berstscheibenanordnung gesicherten Behälter 1 handelt es sich um eine Gasflasche. Die Gasflasche ist auf herkömmliche Art gestaltet und weist einen kurzen und weiten Flaschenhals 11 am oberen Ende auf. Der Flaschenhals 11 hat ein Außengewinde.

An dem Flaschenhals 11 ist die Berstscheibenanordnung 2 befestigt. Die Berstscheibenanordnung 2 weist einen Körper 21 mit einem hohlzylindrischen Abschnitt 211 und einem auskragenden Abschnitt 212 auf, der einen Flansch bildet. Der Flansch ist an einem ersten, in den Abbildungen oberen Ende des Körpers 21 vorgesehen. An einem dem ersten Ende gegenüberliegenden Ende des Körpers 21 ist ein Innengewinde vorgesehen, mit dem der Körper 21 an dem Flaschenhals 11 festgeschraubt ist.

An dem Flansch 212 ist ein Absatz vorgesehen.

Durch diesen Absatz ist eine innere, eingezogene ringförmige Fläche entstanden. In dieser Fläche beginnen Gewindebohrungen 213.

Die Berstscheibenanordnung 2 weist eine Berstscheibe 22 auf. Die kreisförmige Berstscheibe 22, es handelt sich um eine Umkehrberstscheibe, d.h. sie ist in Richtung des im Betrieb unter Druck stehenden Innenraums der Gasflasche gewölbt, hat einen äußeren Durchmesser, der dem äußeren Durchmesser des inneren Rings des Flansches 212 entspricht. Die Berstscheibe 22, die aus einer Metallblechronde hergestellt ist, hat neben einem in Richtung des Inneren der Gasflasche gewölbten inneren Bereichs 221 einen Ringbereich 222, der auf dem inneren Ring des Flansches 212 aufliegt. Kreislöcher in dem Ringbereich 222 der Berstscheibe 22 liegen dabei über den Gewindebohrungen 213 und mit nicht dargestellten Schrauben ist die Berstscheibe ggf. unter Mitwirkung weiterer nicht dargestellter Bauteile mit dem Körper 21 verbunden.

In dem hohlzylindrischen Abschnitt 211 des Körpers ist eine erste Gewindebohrung vorgesehen, die die Wand des Abschnitts 211 schräg durchtritt und auf die Berstscheibe 22 ausgerichtet ist. In dieser ersten Gewindebohrung ist ein Gehäuse 23 anordnet. Das Gehäuse 23 gleicht einer Schraube, die ein axiales Durchgangsloch hat, dass sich von einem mit einem Außensechskant versehenen Schraubenkopf 231 bis zur Spitze der Schraube erstreckt. Das Gehäuse 23 ist in die erste Gewindebohrung im Körper 21 eingeschraubt.

Die Spitze des schraubengleichen Gehäuses 23 ist mit einer Überwurfmutter 24 versehen. Die Überwurfmutter 24 ist auf die Spitze des Gehäuses 23 aufgeschraubt. Die Überwurfmutter 24 hält einen Deckel 25 gegen die Spitze des Gehäuses 23 gedrückt und verschließt damit die Spitze des Gehäuses 23. Der Deckel 25 ist eine Blechronde. Zur besseren Abdichtung ist zwischen dem Deckel 25 und dem Gehäuse 23 eine Dichtung 27 vorgesehen.

Der Deckel 25 schließt den Innenraum des Gehäuses 23 gegenüber dem Innenraum des Körpers 21 und der Gasflasche 1 ab.

In dem Gehäuse 23 ist ein Aktuator 26 vorgesehen. Der Aktuator 26 hat einen Stößel 261 und einen Antrieb, der nicht dargestellt ist. Der Aktuator ist über nicht dargestellte Kabel mit einer ebenfalls nicht dargestellten Steuerung verbunden.

Der Antrieb des Aktuators 26 kann den Stößel 261 gegen den Deckel 25 treiben, so dass der Deckel 25 zerstört wird und der Stößel 261 dann gegen die Berstscheibe 22 schnellt. Dadurch wird die Struktur der Berstscheibe 22 verändert, wodurch der Berstdruck herabgesetzt wird.

**Patentansprüche**

1.  Berstscheibenanordnung (2)

- mit einem ein- oder mehrteiligen Körper (21), der eine Öffnung aufweist, die einen Auslass für eine Leitung oder einen Behälter (1) bildet,
- mit einer Berstscheibe (22), welche die Öffnung verschließt und welche bei einer Beaufschlagung mit einem Berstdruck birst, um die Öffnung freizugeben, und
- mit einem Aktuator (26) zum Herabsetzen des Berstdrucks, wobei der Aktuator (26) eine Stange (261), insbesondere einen Stößel (261) hat, der zum Herabsetzen des Berstdrucks auf die Berstscheibe (22) geeignet und eingerichtet ist, insbesondere gegen die Berstscheibe (22) schlagbar ist,
- wobei die Berstscheibenanordnung ein Gehäuse (23) aufweist, welches den Aktuator (26) aufnimmt und eine Gehäuseöffnung für die Stange (261), insbesondere den Stößel (261) hat,
- wobei die Gehäuseöffnung mit einem Deckel (25) verschlossen ist, wobei der Deckel (25) und der Aktuator (26) so aufeinander abgestimmt sind, dass bei einer Betätigung des Aktuators (26) die auf die Stange (261) des Aktuators (26) wirkende Kraft ausreicht, um mit der Stange (261) den die Gehäuseöffnung verschließenden Deckel (25) zu durchstoßen,
**dadurch gekennzeichnet, dass**
- bei einer Betätigung des Aktuators (26) die auf die Stange (261) des Aktuators (26) wirkende Kraft ausreicht, um mit der Stange (261) gegen die Berstscheibe (22) zu schlagen.

2. Berstscheibenanordnung nach Anspruch 1, **dadurch gekennzeichnet, dass** der Deckel (25) eine Ronde ist.

3. Berstscheibenanordnung nach Anspruch 1 oder 2, **dadurch gekennzeichnet, dass** der Deckel (25) aus Kunststoff oder aus Metall besteht.

4. Berstscheibenanordnung nach einem der Ansprüche 1 bis 3, **dadurch gekennzeichnet, dass** der Deckel (25) mittels einer Überwurfmutter (24) oder einer gelochten Kappe an dem Gehäuse befestigt ist, wobei eine Öffnung der Überwurfmutter (24) bzw. ein Loch in der Kappe so groß ist, dass der Stößel des Aktuators hindurchtreten kann.

5. Berstscheibenanordnung nach einem der Ansprüche 1 bis 4, **dadurch gekennzeichnet, dass** der Deckel (25) gegenüber dem Gehäuse (23) und/oder gegenüber der Überwurfmutter (24) oder der gelochten Kappe mittels wenigstens einer Dichtung (27) abgedichtet ist.

6. Berstscheibenanordnung nach einem der Ansprüche 1 bis 5, **dadurch gekennzeichnet, dass** der Körper (21) eine Ausnehmung, insbesondere eine Gewindebohrung, aufweist und dass das Gehäuse (23) in die Ausnehmung eingesetzt ist, insbesondere mittels eines Außengewindes in die Gewindebohrung eingeschraubt ist.

7. Berstscheibenanordnung nach Anspruch 6, **dadurch gekennzeichnet, dass** das Gehäuse (23) in einen Innenraum des Körpers (21) hineinragt.

8. Berstscheibenanordnung nach Anspruch 7, **dadurch gekennzeichnet, dass** ein mit dem Deckel (25) versehenes Ende des Gehäuses (23) in den Innenraum des Körpers (21) hineinragt.

9. Berstscheibenanordnung nach Anspruch 7 oder 8, **dadurch gekennzeichnet, dass** ein Ende des Gehäuses (23) aus dem Körper (21) herausragt und dass das Gehäuse (23) an diesem Ende eine Öffnung aufweist, durch die Kabel von oder zum Aktuator (26) geführt sind.

10. Berstscheibenanordnung nach einem der Ansprüche 1 bis 9, **dadurch gekennzeichnet, dass** das Gehäuse (23) einen Abschnitt mit einem Innengewinde hat und dass der Aktuator (26) einen Abschnitt mit einem Außengewinde hat und dass der Aktuator (26) in das Innengewinde des Gehäuses (23) eingeschraubt ist.

11. Berstscheibenanordnung nach einem der Ansprüche 1 bis 10, **dadurch gekennzeichnet, dass** der Körper (21) einen Flansch (212) hat, an dem die Berstscheibe befestigt ist.

12. Berstscheibenanordnung nach einem der Ansprüche 6, 7 bis 11 wenn Abhängig von Anspruch 6, **dadurch gekennzeichnet, dass** der Körper (21) einen hohlzylindrischen Abschnitt (211) hat, in dem die Ausnehmung vorgesehen ist, in die das Gehäuse (23) eingesetzt ist.

13. Berstscheibenanordnung nach Anspruch 11 und 12, **dadurch gekennzeichnet, dass** der hohlzylindrische Abschnitt (211) des Körpers (21) auf einer ersten Seite mit dem Flansch (212) des Körpers (21) verbunden ist und durch die an dem Flansch (212) anliegende Berstscheibe (22) verschlossen ist.

14. Berstscheibenanordnung nach Anspruch 13, **dadurch gekennzeichnet, dass** eine zweite Seite des hohlzylindrischen Abschnitts (211) des Körpers (21) Verbindungsstrukturen zur Verbindung mit einem Behälter (1) aufweist.

## Claims

1. Rupture disc assembly (2)

   - having a one-part or multi-part body (21) which has an opening which forms an outlet for a line or a container (1),
   - having a rupture disc (22) which closes the opening and which ruptures when a rupture pressure is applied, in order to unblock the opening, and
   - having an actuator (26) for reducing the rupture pressure, wherein the actuator (26) has a rod (261), in particular a tappet (261), which is suitable and designed to reduce the rupture pressure on the rupture disc (22), in particular can impact against the rupture disc (22),
   - wherein the rupture disc assembly has a housing (23) which accommodates the actuator (26) and has a housing opening for the rod (261), in particular the tappet (261),
   - wherein the housing opening is closed with a lid (25), wherein the lid (25) and the actuator (26) are correlated such that when the actuator (26) is actuated the force acting on the rod (261) of the actuator (26) is sufficient to break through the lid (25), closing the housing opening, with the rod (261),
   **characterised in that**
   - when the actuator (26) is actuated the force acting on the rod (261) of the actuator (26) is sufficient to strike with the rod (261) against the rupture disc (22).

2. Rupture disc assembly according to claim 1, **characterised in that** the lid (25) is a circular blank.

3. Rupture disc assembly according to claim 1 or 2, **characterised in that** the lid (25) consists of plastic or of metal.

4. Rupture disc assembly according to any of claims 1 to 3, **characterised in that** the lid (25) is fastened to the housing by means of a union nut (24) or a perforated cap, wherein an opening of the union nut (24) or a hole in the cap is so large that the tappet of the actuator can pass through it.

5. Rupture disc assembly according to any of claims 1 to 4, **characterised in that** the lid (25) is sealed against the housing (23) and/or against the union nut (24) or the perforated cap by means of at least one seal (27).

6. Rupture disc assembly according to any of claims 1 to 5, **characterised in that** the body (21) has a recess, in particular a threaded bore, and that the housing (23) is inserted into the recess, in particular is screwed in by means of an outer threading into the threaded bore.

7. Rupture disc assembly according to claim 6, **characterised in that** the housing (23) protrudes into an inner chamber of the body (21).

8. Rupture disc assembly according to claim 7, **characterised in that** an end of the housing (23) equipped with the lid (25) protrudes into the inner chamber of the body (21).

9. Rupture disc assembly according to claim 7 or 8, **characterised in that** an end of the housing (23) protrudes out of the body (21) and that the housing (23) has at this end of an opening through which cables are guided from or to the actuator (26).

10. Rupture disc assembly according to any of claims 1 to 9, **characterised in that** the housing (23) has a section with an inner threading and that the actuator (26) has a section with an outer threading and that the actuator (26) is screwed into the inner threading of the housing (23).

11. Rupture disc assembly according to any of claims 1 to 10, **characterised in that** the body (21) has a flange (212) on which the rupture disc is fastened.

12. Rupture disc assembly according to any of claims 6, 7 to 11 if dependent on claim 6, **characterised in that** the body (21) has a hollow cylindrical section (211) in which the recess is provided into which the housing (23) is inserted.

13. Rupture disc assembly according to claims 11 and 12, **characterised in that** the hollow cylindrical section (211) of the body (21) is connected on a first side with the flange (212) of the body (21) and is closed by the rupture disc (22) abutting on the flange (212).

14. Rupture disc assembly according to claim 13, **characterised in that** a second side of the hollow cylindrical section (211) of the body (21) has connecting structures for connecting with a container (1).

## Revendications

1. Système de disque de rupture (2)

   - avec un corps en une ou plusieurs parties (21) qui présente une ouverture qui forme une sortie pour une conduite ou un récipient (1),
   - avec un disque de rupture (22) qui ferme l'ouverture et qui éclate lorsqu'il est exposé à une pression d'éclatement pour libérer l'ouverture, et

- avec un actionneur (26) pour réduire la pression d'éclatement, l'actionneur (26) comportant une tige (261), notamment un poussoir (261), qui est adapté et configuré pour réduire la pression d'éclatement sur le disque de rupture (22), et peut en particulier être frappé contre le disque de rupture (22),

- le système de disque de rupture comprenant un boîtier (23) qui reçoit l'actionneur (26) et comprend une ouverture de boîtier pour la tige (261), en particulier le poussoir (261),

- l'ouverture de boîtier étant fermée par un couvercle (25), le couvercle (25) et l'actionneur (26) étant adaptés l'un à l'autre de sorte que, lorsque l'actionneur (26) est actionné, la force agissant sur la tige (261) de l'actionneur (26) est suffisante pour percer le couvercle (25) fermant l'ouverture de boîtier avec la tige (261),

**caractérisé en ce que**

- lorsque l'actionneur (26) est actionné, la force agissant sur la tige (261) de l'actionneur (26) est suffisante pour frapper contre le disque de rupture (22) avec la tige (261).

2. Système de disque de rupture selon la revendication 1, **caractérisé en ce que** le couvercle (25) est un flan circulaire.

3. Système de disque de rupture selon la revendication 1 ou 2, **caractérisé en ce que** le couvercle (25) est en plastique ou en métal.

4. Système de disque de rupture selon l'une quelconque des revendications 1 à 3, **caractérisé en ce que** le couvercle (25) est fixé au boîtier au moyen d'un écrou-raccord (24) ou d'un capuchon perforé, une ouverture de l'écrou-raccord (24) ou un trou dans le capuchon étant suffisamment grand pour que le poussoir de l'actionneur puisse passer à travers.

5. Système de disque de rupture selon l'une quelconque des revendications 1 à 4, **caractérisé en ce que** le couvercle (25) est scellé du boîtier (23) et/ou de l'écrou-raccord (24) ou du capuchon perforé au moyen d'au moins un joint d'étanchéité (27).

6. Système de disque de rupture selon l'une quelconque des revendications 1 à 5, **caractérisé en ce que** le corps (21) présente un évidement, en particulier un taraudage, et que le boîtier (23) est installé dans l'évidement, en particulier est vissé dans le taraudage au moyen d'un filetage extérieur.

7. Système de disque de rupture selon la revendication 6, **caractérisé en ce que** le boîtier (23) fait saillie dans un espace intérieur du corps (21).

8. Système de disque de rupture selon la revendication 7, **caractérisé en ce qu'**une extrémité du boîtier (23) muni du couvercle (25) fait saillie dans l'espace intérieur du corps (21).

9. Système de disque de rupture selon la revendication 7 ou 8, **caractérisé en ce qu'**une extrémité du boîtier (23) fait saillie hors du corps (21) et que le boîtier (23) présente à cette extrémité une ouverture à travers laquelle sont conduits les câbles en provenance ou à destination de l'actionneur (26).

10. Système de disque de rupture selon l'une quelconque des revendications 1 à 9, **caractérisé en ce que** le boîtier (23) présente une section avec un filetage intérieur et que l'actionneur (26) présente une section avec un filetage extérieur et que l'actionneur (26) est vissé dans le filetage intérieur du boîtier (23).

11. Système de disque de rupture selon l'une quelconque des revendications 1 à 10, **caractérisé en ce que** le corps (21) comporte une bride (212) à laquelle le disque de rupture est fixé.

12. Système de disque de rupture selon l'une quelconque des revendications 6, 7 à 11 lorsqu'il dépend de la revendication 6, **caractérisé en ce que** le corps (21) présente une section cylindrique creuse (211) dans laquelle est prévu l'évidement dans lequel le boîtier (23) est installé.

13. Système de disque de rupture selon les revendications 11 et 12, **caractérisé en ce que** la section cylindrique creuse (211) du corps (21) est reliée d'un premier côté à la bride (212) du corps (21) et est fermée par le disque de rupture (22) reposant contre la bride (212).

14. Système de disque de rupture selon la revendication 13, **caractérisé en ce qu'**un deuxième côté de la section cylindrique creuse (211) du corps (21) présente des structures de connexion pour la connexion à un récipient (1).

Fig. 1

Fig. 2

Fig. 3

213

212

222

221

A

A

EP 3 354 948 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 15174944 A
- DE 102007022018 A1
- US 4126184 A
- US 6006842 A
- US 15174944 B
- US 20100127195 A1